# EUROPEAN PATENT SPECIFICATION

(11) **EP 1 638 385 B1**
(45) Date of publication and mention of the grant of the patent: **12.11.2008**
(21) Application number: 04742154.0
(22) Date of filing: 01.07.2004
(51) Int. Cl.: A01B 3/28, A01B 35/00

(54) **SOIL CULTIVATING DEVICE**
BODENBEARBEITUNGSVORRICHTUNG
CULTIVATEUR

(30) Priority: 01.07.2003 FI 20030990
(43) Date of publication of application: 29.03.2006
(73) Proprietor: Metalliasennus Huuhka OY, 21570 Sauvo (FI)
(72) Inventor: HUUHKA, Pertti, FI-21570 Sauvo (FI)
(74) Representative: Maskula, Silla Marjatta
(86) International application number: PCT/FI2004/000411
(87) International publication number: WO 2005/002317

(56) References cited:
- US-A- 5 000 267
- US-A- 5 062 488

## Description

### Technical field

The object of this invention is a device for soil cultivation intended to be pulled by a vehicle.

### Prior art

There are many different cultivation devices on the market intended for the cultivation of soil and having a drawbar, a frame and mouldboards.

On the market one can find light cultivation devices with the drawbar attached at the centre of the cultivation device, so that that portion of the cultivation device, where the mouldboards are attached, can be turned in relation to the drawbar so that either the mouldboards on the right hand side or on the left hand side will run in front during the cultivation process. In these cultivation devices the mouldboards are symmetric and such that the soil will be directed to the right or to the left in relation to the mouldboard, depending on whether the right hand or the left hand mouldboards run in the front. Due to the mouldboards turning the soil into both directions a cultivation device of this type requires a greater force than cultivation devices provided with mouldboards turning the soil only into one direction, because the force required by each mouldboard is greater than the force required by a corresponding asymmetric mouldboard turning the soil in only one direction.

On the market one can also find devices intended for ploughing cultivation and having two sets of mouldboards turning the soil into different directions and located on opposite sides of frame of the cultivation device. In these devices one end of the cultivation device is attached to a pulling vehicle. The frame of the cultivation device can be turned either to the right side or to the left side in relation to the driving direction. When the frame of the cultivation device is turned to the right side those mouldboards intended to turn the soil to the right are located against the soil and thus turning the soil, and those mouldboards intended to turn the soil to the left point upwards and do not turn the soil. Correspondingly, if the frame of the cultivation device is turned to the left side those mouldboards intended to turn the soil to the left are located against the soil and thus turning the soil, and those mouldboards intended to turn the soil to the right point upwards and do not turn the soil. During back and forth driving the frame is alternately turned from one side to the other, and thus the soil is always turned into the same direction. As a cultivation device of this kind is pulled from one end it must have a very rigid structure, and thus it is heavy. The pulling vehicle must be driven with one wheel in the furrow and thus in a tilted position, as the area to be cultivated remains on the other side of the driving direction.

US patent 5,062,488 discloses an apparatus for tilling soil adapted to generate a set of small, spaced, parallel, flat topped terraces with furrows therebetween having therein lateral dams during said tilling operation generally including a bridge-style frame means comprising: a. a bridge frame with a tongue to attach the apparatus to a prime mover at a hitch point for towing the apparatus; b. a support wheel for supporting the frame and controlling the height above ground level of said bridge frame means; c. a set of first, second and third coulters carried by a coulter support frame means; d. a set of ripper plow means carried by a second frame means; e. a plurality of moldboard plow assembly means carried by a third cross frame means, each of said moldboard plow assembly means being widely laterally spaced; and f. a plurality of lateral dam generator means carried by a fourth cross frame means.

### List of drawings

Figure 1a shows schematically from the upper right a cultivation device turning soil to the left.
Figure 1b shows schematically from the upper left a cultivation device turning soil to the right.
Figure 2a shows schematically the locking arrangement of the mouldboard attachment arm in a cultivation device turning soil to the left.
Figure 2b shows schematically the locking arrangement of the mouldboard attachment arm in a cultivation device turning soil to the right.
Figure 3 shows schematically a cultivation device comprising a rear harrow.

### General description of the invention

The object of this invention is to provide a cultivation device having the advantages of the light cultivation device described above, but requiring substantially less force to be pulled. A further object is to provide a cultivation device, which is suitable for ploughing cultivation and which has the advantages of the light cultivation device described above.

This invention is characterised in what is presented in the independent claim below.

This invention relates to a device for soil cultivation and pulled by a vehicle, the device comprising a frame with a drawbar attached to the frame ; an attachment shaft substantially in the direction of the longitudinal axis of the frame; and mouldboards; and a drawbar which is coupled substantially centrally to the frame so that the angle between the longitudinal axis of the frame being substantially transversal regarding the driving direction during cultivation, and the drawbar being substantially in parallel with the driving direction, is arranged to be adjustable.

The cultivation device is constructed such that
a) there are two types of mouldboards; first mouldboards which during cultivation turn the soil to the right in relation to the driving direction; and second mouldboards which during cultivation turn the soil to the left in relation to the driving direction;
b) the mouldboards are fastened to the mouldboard attachment shaft so that the first mouldboards are substantially parallel in relation to each other, the second mouldboards are substantially parallel in relation to each other, and the first mouldboards are directed in a substantially different direction in relation to the second mouldboards; and
c) the mouldboard attachment shaft is arranged to be rotated around its longitudinal axis so that there are at least two attachment shaft positions to be used in the cultivation; a first position where the first mouldboards are arranged during cultivation to turn the soil to the right in relation to the driving direction; and a second position where the second mouldboards are arranged during cultivation to turn the soil to the left in relation to the driving direction.

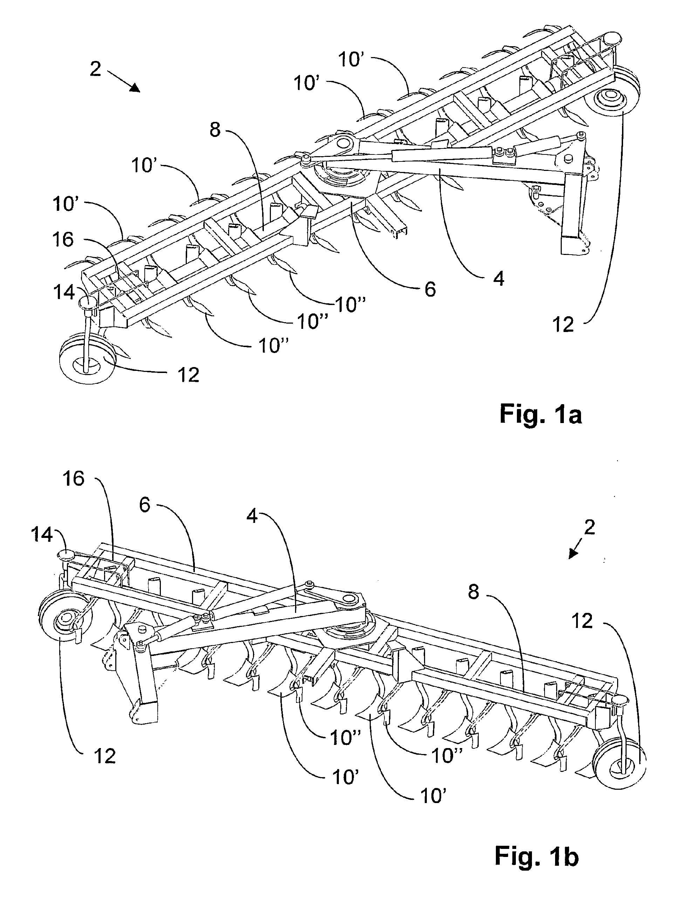

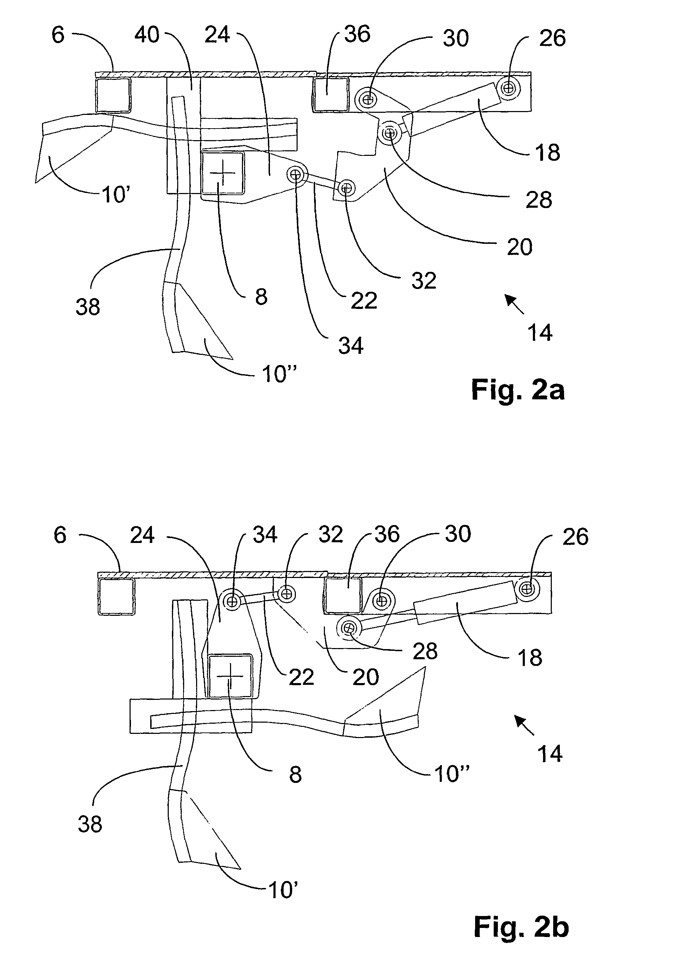

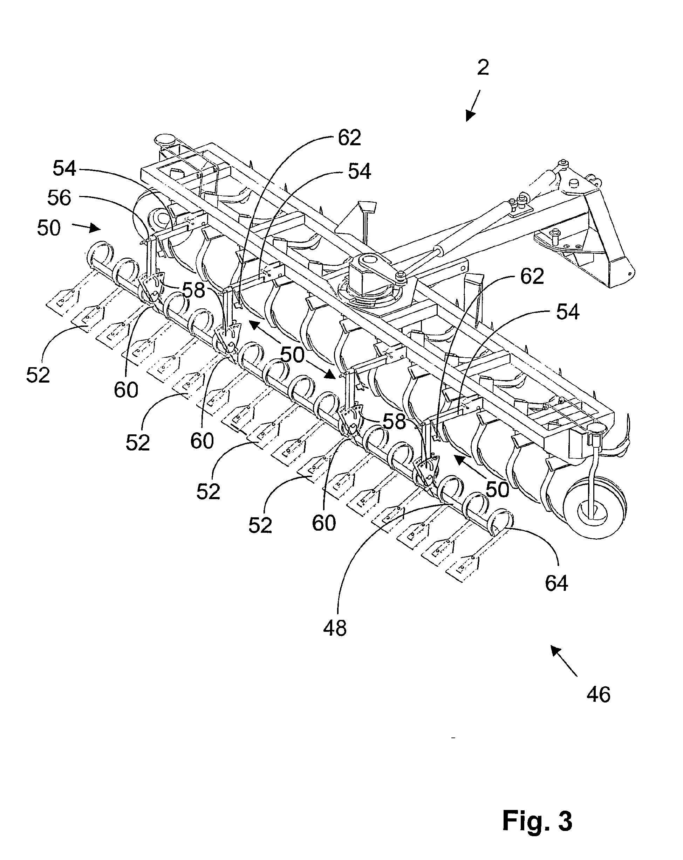

The invention is described in more detail below with reference to the enclosed figures. Figures 1a and 1b show schematically a cultivation device 2 according to an advantageous embodiment of the invention, which is intended for the cultivation of soil and to be pulled by a vehicle, whereby the device comprises a drawbar 4; a frame 6; an attachment shaft 8 substantially in parallel with the longitudinal axis of the frame 6 for attachment of the mouldboards 10', 10"; and mouldboards 10', 10". Figures 2a and 2b show schematically a locking arrangement of the attachment shaft 8 intended for different turning directions of the cultivation device according to an advantageous embodiment of the invention. Figure 3 shows schematically a cultivation device 2 according to the invention comprising a rear harrow.

The cultivation device 2 has a drawbar 4, which during cultivation is substantially in parallel with the driving direction, and which is fastened substantially centrally to the frame 6 of the cultivation device 2, so that the angle between the longitudinal axis of the frame 6 being substantially transversal regarding the driving direction during cultivating, and the drawbar 4, is arranged to be adjustable.

There are two types of mouldboards 10', 10"; first mouldboards 10' which during cultivation direct the soil to the right in relation to the driving direction (figures 1b and 2b); and second mouldboards 10" which during cultivation direct the soil to the left in relation to the driving direction (figures 1a and 2a). The mouldboards 10', 10" are attached to the mouldboard attachment shaft 8 so that the first mouldboards 10' are substantially parallel in relation to each other, the second mouldboards 10" are mutually substantially in parallel, and the first mouldboards 10' are directed in a substantially different direction in relation to the second mouldboards 10". The mouldboard attachment shaft S is arranged to be rotated around its longitudinal axis so that there are at least two attachment shaft 8 positions to be used in the cultivation; a first position where the first mouldboards 10' are arranged during cultivation to turn the soil to the right in relation to the driving direction; and a second position where the second mouldboards 10" are arranged during cultivation to turn the soil to the left in relation to the driving direction. In these positions only either the first 10' or the second 10" mouldboards turn the soil.

The cultivation device can be a light cultivation device having a cultivation depth of about 5 to 15 cm, advantageously about 5 to 10 cm. The cultivation device can also be a plough with a cultivation depth of about 10 to 25 cm, advantageously about 10 to 15 cm.

The angle between the drawbar 4 and the frame 6 can be adjusted into at least two different positions, whereby in the first position the acute angle between the drawbar 4 and the longitudinal axis of the frame 6 is on the right side in relation to the driving direction, and in the second position the acute angle is on the left side in relation to the driving direction. The angle between the drawbar 4 and the longitudinal axis of the frame 6 can be adjustable between about 0° and 180°, advantageously between about 10° and 160°. The adjustment is typically realized either hydraulically or pneumatically, advantageously hydraulically using a hydraulic cylinder 16, and the adjustment can be stepless.

The first mouldboards 10' and the second mouldboards 10" are typically mirror images of each other.

The mouldboard attachment shaft 8 is typically fastened at both ends to the frame 6 of the cultivation device. Particularly if the attachment shaft is long it can also be fastened at several points to the frame 6 of the cultivation device. The shaft 8 can also be a multiple part component, so that the frame 6 contains several individual, rotatable mouldboard attachment shafts 8 according to the invention. The mouldboard attachment shaft 8 can be mounted in bearings at least at its both ends. If there are more shafts each of them can be mounted in bearings at least at their both ends. The mouldboard attachment shaft 8 can be typically rotated about 180° around its longitudinal axis. Depending on the type and function of the cultivation device it can be advantageously rotated only about 90° or even only about 60°. Typically the mouldboard attachment shaft 8 can be rotated either hydraulically or pneumatically, advantageously using a hydraulic cylinder 18.

The mouldboards 10', 10" can be resiliently attached to the attachment shaft 8, advantageously by springs. Alternatively, each mouldboard 10', 10" can be attached to the attachment shaft using at least one shear pin or the like, so that if a single mouldboard 10', 10" hits an unyielding obstacle, for instance a large stone, then the shear pin breaks and the mouldboard 10' or 10" can turn or come loose and thus prevent damage of the cultivation device 2.

Typically the cultivation device according to the invention has a wheel or wheels 12. Advantageously the cultivation device has a wheel 12 at both ends of the frame 6. The wheels 12 support the cultivation device so that the cultivation is effected at the desired depth. The height of the wheels 12 in relation to the frame 6 of the cultivation device 2 can be adjustable, advantageously mechanically with the aid of a crank, so that the cultivation depth of the cultivation device 2 is adjusted by adjusting their height. The wheels 12 can be arranged to be turned in parallel with the driving direction by transmitting the rotational motion of the attachment shaft 8 to the shaft 14 turning the wheels 12, for instance via a chain drive 16.

Figures 2a and 2b show schematically the locking arrangement of the attachment shaft 8 for the mouldboards 10', 10" according to an advantageous embodiment of the invention. In this arrangement the attachment shaft 8 is locked in two positions, which are used during soil cultivation. In the first position (figure 2b) the mouldboards 10' are during cultivation arranged to turn the soil to the right in relation to the driving direction, and in the second position (figure 2a) the mouldboards 10" are during cultivation arranged to turn the soil to the left in relation to the driving direction.

In an arrangement according to that one illustrated in figures 2a and 2b the attachment shaft 8 is rotated from the first position to the second position or from the second position to the first position by a hydraulic cylinder 18 via the locking block 20 of the mouldboards 10', 10" attachment shaft 8 and the lever arm 24 of the attachment shaft 8. At the first end the hydraulic cylinder 18 is pivotally supported by a first fastening shaft 26 and fastened to the frame 6, and at its second end it is supported by a second fastening shaft 28 and fastened to the central part of the locking block 20. The locking block 20 is pivotally attached at its first end via a third fastening shaft 30 to the frame 6 and at its second end via a fourth fastening shaft 32 to the first end of a transmission arm 22. The transmission arm 22 is at its second end pivotally fastened via a fifth fastening shaft 34 to the first end of the lever arm 24 on the attachment shaft 8. The second end the lever arm 24 is stationary fastened to the attachment shaft 8, so that the motion of the lever arm 24 rotates the shaft 8. The shape of the locking block 20 is adapted so that in the first position of the attachment shaft 8 it will abut the lower surface and the side surface of the frame's bar 36, with a square cross section, opposite the attachment shaft 8.

The fastening shafts 30, 32 and 34 are arranged in relation to each other so that if the attachment shaft 8 is in the first position (figure 2b) and the attachment shaft 8 is rotated clockwise, as during ploughing the force acting on the mouldboards 10' tends to do, then the rotation of the attachment shaft 8 is prevented. Rotation of the shaft 8 is prevented because the lever arm 24 presses via the transmission arm 22 the locking block 20 against the bar 36 of the frame 6. The lever arm 22 rotates the locking block 20 clockwise around the fastening shaft 30 when the fastening shaft 32 is above the level formed by the fastening shafts 30 and 34. On the other hand the fastening shafts 26, 28 and 30 are arranged in relation to each other so that a shortening of the hydraulic cylinder 18 rotates (figures 2b and 2a) the locking block 20 anticlockwise around the fastening shaft 30. The shortening rotates the locking block 20 anticlockwise when the fastening shaft 28 is below the level formed by the fastening shafts 26 and 30. On the other hand the fastening shafts 32 and 34 of the transmission arm 22 and the attachment shaft 8 are arranged in relation to each other so that an anticlockwise rotation of the locking block 20 will rotate the attachment shaft 8 clockwise. In the embodiment example the support arm 38 attaches one or more mouldboards 10" to the attachment shaft 8, and it has a support arm 38 extension 40 on the opposite side of the attachment shaft 8, as seen from the mouldboard 10', whereby the extension 40 abuts the frame 6 when the attachment shaft 8 has rotated to its second position (figure 2a). Then the attachment shaft 8 is prevented from rotating further clockwise, for instance due to the force acting on the mouldboards 10" during ploughing.

Obviously the attachment shaft 8 can be locked in its first or second position also with aid of other means 14 than those described above, so that the actuator 18 rotating the attachment shaft 8 will release the locking but does not actually keep the attachment shaft 8 in the locked position, and/or that a rotation of the attachment shaft 8 due to the rotational forces, which due to cultivating the soil act on the mouldboards 10', 10" and via them on the attachment shaft 8, is prevented in other ways than that described above.

If the attachment shaft 8 is locked in its first or second position in the way described above, then it is not necessary to lock the attachment shaft 8 into these positions (and to unlock it from these positions) by any particular means, nor to dimension the actuator rotating the attachment shaft 8 from the first position to the second position or vice versa so that it also is able to keep the shaft in these positions during cultivation of the soil. Thus the arrangement enables the use of a quite small, and thus also a more economical and lighter actuator, for instance a small hydraulic cylinder 18 for rotating the attachment shaft 8 from one position to the other.

Figure 3 shows schematically an advantageous embodiment of a device 2 for soil cultivation according to the invention comprising a rear harrow 46. In other respects the embodiment is according to that described above, for instance to that presented in the figures 1a and 1b, and it may also be for instance according to that presented in figures 2a and 2b, but a rear harrow 46 is fastened to its frame. Because according to the invention the frame 6 of the cultivation device 2 is typically in a position, which is somewhat turned from the position transversal to the driving direction, for instance turned about 50°, then the rear harrow 46 will also be in the same position in relation to the driving direction. The rear harrow 46 according to the embodiment comprises a frame bar 48 of the harrow 46 with a length equalling roughly the length of the frame 6 of the cultivation device 2; suspension means 50 with which the harrow is suspended in the frame 6 of the cultivation device; and harrow blades 52. In the embodiment according to the figure there are four suspension means 50, and they comprise a fastening body 54, which is fastened to the frame 6 of the cultivation device 2. Each fastening body 54 has roughly in the horizontal plane a shaft 56, which is substantially perpendicular to the frame bar 48, and from which an adjustment member 58 of the suspension means 50 is pivotally suspended. The adjustment members 58 are fastened to the frame bar 48 via joints 60. Thus the frame bar 48 can move in its length direction back and forth in relation to the frame 6 of the cultivation device 2, as far as allowed by the limiters 62 fastened to the fastening bodies 54. The harrow blades 52 of the embodiment are in this embodiment example made of plastics, and with the aid of springs 64 they are fastened at equal distances and mutually in parallel to the frame bar 48. The frame bar 48 can be turned stepwise around its longitudinal axis with the aid of the adjustment means 58, and thereby it is possible to act on the height and position of the harrow blades 52.

By adding the harrow 46 to form a part of the cultivation device 2 according to the invention the cultivation device 2 can provide a uniform cultivation result also in soils, which are difficult to cultivate, such as clay soils.

The invention is not intended to be restricted to the embodiments presented above as examples, but on the contrary, the invention should be widely interpreted within the scope defined by the claims presented below.

## Claims

1. A cultivation device (2) intended for the cultivation of soil and pulled by a vehicle, the device comprising a frame (6) with a drawbar (4) attached to the frame; an attachment shaft (8) for mouldboards (10', 10"), the shaft extending substantially in the direction of the longitudinal axis of the frame (6); and mouldboards (10', 10"); and a drawbar (4) which is coupled substantially centrally to the frame (6),
wherein
a) there are two types of mouldboards (10', 10"); first mouldboards (10') which during cultivation turn the soil to the right in relation to said driving direction; and second mouldboards (10") which during cultivation turn the soil to the left in relation to said driving direction;
b) the mouldboards (10', 10") are fastened to the mouldboard attachment shaft (8) so that the first mouldboards (10') are substantially parallel in relation to each other, the second mouldboards (10") are substantially parallel in relation to each other, and the first mouldboards (10') are directed in a substantially different direction in relation to the second mouldboards (10");
c) the mouldboard (10', 10") attachment shaft (8) is arranged to be rotated around its longitudinal axis so that there are at least two attachment shaft (8) positions to be used in the cultivation; a first position where the first mouldboards (10') are arranged during cultivation to turn the soil to the right in relation to said driving direction; and a second position where the second mouldboards (10") are arranged during cultivation to turn the soil to the left in relation to said driving direction, **characterised in that** the drawbar (4) is coupled to the frame (6) so that the angle between the longitudinal axis of the frame (6), being substantially horizontal and transversal regarding the driving direction during cultivation, and the drawbar (4), being substantially in parallel with the driving direction during cultivation, is arranged to be adjustable.

2. A cultivation device (2) according to claim 1, **characterised in that** the cultivation device is a light cultivation device having a cultivation depth of about 5 to 15 cm, advantageously about 5 to 10 cm.

3. A cultivation device (2) according to claim 1, **characterised in that** the cultivation device is a plough with a cultivation depth of about 10 to 25 cm, advantageously about 10 to 20 cm.

4. A cultivation device (2) according to claim 1, 2 or 3, **characterised in that** the angle between the drawbar (4) and the frame (6) can be adjusted into at least two different positions, whereby in the first position the acute angle between the drawbar (4) and the longitudinal axis of the frame (6) is on the right side in relation to said driving direction, and in the second position the acute angle is on the left side in relation to said driving direction.

5. A cultivation device (2) according to any previous claim, **characterised in that** the angle between the drawbar 4 and the longitudinal axis of the frame 6 can be adjustable, advantageously in a stepless manner, between about 0° and 180°, advantageously between about 10° and 160°.

6. A cultivation device (2) according to any previous claim, **characterised in that** the first mouldboards (10') and the second mouldboards (10") are mirror images of each other.

7. A cultivation device (2) according to any previous claim, **characterised in that** the mouldboard attachment shaft (8) is fastened at least at its both ends to the frame (6) of the cultivation device.

8. A cultivation device (2) according to any previous claim, **characterised in that** the mouldboard attachment shaft (8) is mounted in bearings at least at its both ends.

9. A cultivation device (2) according to any previous claim, **characterised in that** the mouldboard attachment shaft (8) can be rotated about 180° around its longitudinal axis, advantageously about 90° or 60°.

10. A cultivation device (2) according to any previous claim, **characterised in that** each mouldboard (10', 10") is attached to the mouldboard attachment shaft (8) using at least one shear pin.

11. A cultivation device (2) according to any previous claim, **characterised in that** the cultivation device has a wheel or wheels (12), advantageously a wheel (12) at both ends of the frame (6), which wheels support the cultivation device (2).

12. A cultivation device (2) according to claim 11, **characterised in that** the height of the wheel or wheels is arranged to be adjustable, so that the cultivation depth of the cultivation device (2) is adjusted by adjusting the height.

13. A cultivation device (2) according to any previous claim, **characterised in that** an adjustment or some adjustments of the cultivation device; advantageously the angle between the drawbar (4) and the longitudinal axis of the frame (6) and/or the rotation of the mouldboard attachment shaft (8) around its longitudinal axis; is or are hydraulic.

14. A cultivation device (2) according to any previous claim, **characterised in that** the means (14), which rotate the mouldboard (10', 10") attachment shaft (8) into the first and second positions, lock the attachment shaft (8) into the first position when soil is cultivated with the first mouldboards (10').

15. A cultivation device (2) according to any previous claim, **characterised in that** when the mouldboard (10', 10") attachment shaft (8) is in its second position, which is used to cultivate the soil with the second mouldboards (10"), the shaft can not be rotated further **in that** direction, into which the force acting on the mouldboards (10") tends to rotate said attachment shaft (8) during cultivation of the soil.

16. A cultivation device (2) according to any previous claim, **characterised in that** the cultivation device (2) comprises a rear harrow (46).

## Patentansprüche

1. Bodenbearbeitungsvorrichtung (2), welche für die Bearbeitung eines Erdreichs vorgesehen ist und durch ein Fahrzeug gezogen wird, wobei die Vorrichtung einen Rahmen (6) mit einer Deichsel (4), welche an dem Rahmen angebracht ist; eine Halterungswelle (8) für Abstreifbleche (10', 10"), wobei sich die Welle im Wesentlichen in der Richtung der Längsachse des Rahmens (6) erstreckt; und Abstreifbleche (10', 10"); und eine Deichsel (4), welche im Wesentlichen mittig mit dem Rahmen (6) gekoppelt ist, umfasst,
wobei
a) es zwei Arten von Abstreifblechen (10', 10") gibt; erste Abstreifbleche (10'), welche während einer Bodenbearbeitung das Erdreich relativ zu der Antriebsrichtung nach rechts wenden; und zweite Abstreifbleche (10"), welche während einer Bodenbearbeitung das Erdreich bezüglich der Antriebsrichtung nach links wenden;
b) die Abstreifbleche (10', 10") an der Abstreifblechhalterungswelle (8) befestigt sind, so dass die ersten Abstreifbleche (10') im Wesentlichen parallel zueinander angeordnet sind, die zweiten Abstreifbleche (10") im Wesentlichen parallel zueinander angeordnet sind und die ersten Abstreifbleche (10') in einer im Wesentlichen anderen Richtung bezüglich der zweiten Abstreifbleche (10") ausgerichtet sind;
c) die Halterungswelle (8) für die Abstreifbleche (10', 10") derart ausgestaltet ist, dass sie um ihre Längsachse gedreht wird, so dass es mindestens zwei Positionen der Halterungswelle (8) gibt, welche bei der Bodenbearbeitung eingesetzt werden; eine erste Position, wobei die ersten Abstreifbleche (10') während der Bodenbearbeitung derart angeordnet sind, dass sie das Erdreich bezüglich der Antriebsrichtung nach rechts wenden; und eine zweite Position, wobei die zweiten Abstreifbleche (10") während der Bodenbearbeitung derart angeordnet sind, dass sie das Erdreich bezüglich der Antriebsrichtung nach links wenden, **dadurch gekennzeichnet, dass** die Deichsel (4) mit dem Rahmen (6) gekoppelt ist, so dass der Winkel zwischen der Längsachse des Rahmens (6), welche während der Bodenbearbeitung im Wesentlichen horizontal und quer bezüglich der Antriebsrichtung angeordnet ist, und der Deichsel (4), welche während der Bodenbearbeitung im Wesentlichen parallel zu der Antriebsrichtung angeordnet ist, derart eingerichtet ist, dass er einstellbar ist.

2. Bodenbearbeitungsvorrichtung (2) nach Anspruch 1, **dadurch gekennzeichnet, dass** die Bodenbearbeitungsvorrichtung eine leichte Bodenbearbeitungsvorrichtung ist, welche eine Bodenbearbeitungstiefe von ungefähr 5 bis 15 cm, vorteilhafterweise ungefähr 5 bis 10 cm, aufweist.

3. Bodenbearbeitungsvorrichtung (2) nach Anspruch 1, **dadurch gekennzeichnet, dass** die Bodenbearbeitungsvorrichtung ein Pflug mit einer Bodenbearbeitungstiefe von ungefähr 10 bis 25 cm, vorteilhafterweise ungefähr 10 bis 20 cm, ist.

4. Bodenbearbeitungsvorrichtung (2) nach Anspruch 1, 2 oder 3, **dadurch gekennzeichnet, dass** der Winkel zwischen der Deichsel (4) und dem Rahmen (6) in mindestens zwei unterschiedliche Positionen eingestellt werden kann, wobei bei der ersten Position der spitze Winkel zwischen der Deichsel (4) und der Längsachse des Rahmens (6) auf der rechten Seite bezüglich der Antriebsrichtung liegt und wobei bei der zweiten Position der spitze Winkel auf der linken Seite bezüglich der Antriebsrichtung liegt.

5. Bodenbearbeitungsvorrichtung (2) nach einem der vorhergehenden Ansprüche, **dadurch gekennzeichnet, dass** der Winkel zwischen der Deichsel (4) und der Längsachse des Rahmens (6) vorteilhafterweise in einer stufenlosen Weise zwischen ungefähr 0° und 180°, vorteilhafterweise zwischen ungefähr 10° und 160°, eingestellt werden kann.

6. Bodenbearbeitungsvorrichtung (2) nach einem der vorhergehenden Ansprüche, **dadurch gekennzeichnet, dass** die ersten Abstreifbleche (10') und die zweiten Abstreifbleche (10") Spiegelbilder voneinander sind.

7. Bodenbearbeitungsvorrichtung (2) nach einem der vorhergehenden Ansprüche, **dadurch gekennzeichnet, dass** die Abstreifblechhalterungswelle (8) zumindest an ihren beiden Enden mit dem Rahmen (6) der Bodenbearbeitungsvorrichtung befestigt ist.

8. Bodenbearbeitungsvorrichtung (2) nach einem der vorhergehenden Ansprüche, **dadurch gekennzeichnet, dass** die Abstreifblechhalterungswelle (8) in Lagern zumindest bei ihren beiden Enden angebracht ist.

9. Bodenbearbeitungsvorrichtung (2) nach einem der vorhergehenden Ansprüche, **dadurch gekennzeichnet, dass** die Abstreifblechhalterungswelle (8) um ungefähr 180° um ihre Längsachse, vorteilhafterweise um 90° oder 60°, gedreht werden kann.

10. Bodenbearbeitungsvorrichtung (2) nach einem der vorhergehenden Ansprüche, **dadurch gekennzeichnet, dass** jedes Abstreifblech (10', 10") unter Verwendung mindestens eines Scherbolzens an der Abstreifblechhalterungswelle (8) angebracht ist.

11. Bodenbearbeitungsvorrichtung (2) nach einem der vorhergehenden Ansprüche, **dadurch gekennzeichnet, dass** die Bodenbearbeitungsvorrichtung ein Rad oder Räder (12), vorteilhafterweise ein Rad (12) an beiden Enden des Rahmens (6), aufweist, wobei die Räder die Bodenbearbeitungsvorrichtung (2) tragen.

12. Bodenbearbeitungsvorrichtung (2) nach Anspruch 11, **dadurch gekennzeichnet, dass** die Höhe des Rades oder der Räder derart eingerichtet ist, dass sie verstellbar ist, so dass die Bodenbearbeitungstiefe der Bodenbearbeitungsvorrichtung (2) eingestellt wird, indem die Höhe eingestellt wird.

13. Bodenbearbeitungsvorrichtung (2) nach einem der vorhergehenden Ansprüche, **dadurch gekennzeichnet, dass** eine Einstellung oder einige Einstellungen der Bodenbearbeitungsvorrichtung; vorteilhafterweise der Winkel zwischen der Deichsel (4) und der Längsachse des Rahmens (6) und/oder die Drehung der Abstreifblechhalterungswelle (8) um ihre Längsachse hydraulisch erfolgt oder erfolgen.

14. Bodenbearbeitungsvorrichtung (2) nach einem der vorhergehenden Ansprüche, **dadurch gekennzeichnet, dass** die Mittel (14), welche die Halterungswelle (8) für die Abstreifbleche (10', 10") in die erste und die zweite Position drehen, die Halterungswelle (8) in der ersten Position verriegeln, wenn das Erdreich mit den ersten Abstreifblechen (10') bearbeitet wird.

15. Bodenbearbeitungsvorrichtung (2) nach einem der vorhergehenden Ansprüche, **dadurch gekennzeichnet, dass**, wenn sich die Halterungswelle (8) für die Abstreifbleche (10', 10") in ihrer zweiten Position befindet, welche eingesetzt wird, um das Erdreich mit den zweiten Abstreifblechen (10") zu bearbeiten, die Welle nicht weiter in diejenige Richtung gedreht werden kann, in welche die Kraft, die auf die Abstreifbleche (10") wirkt, die Halterungswelle (8) während der Bearbeitung des Erdreichs drehen möchte.

16. Bodenbearbeitungsvorrichtung (2) nach einem der vorhergehenden Ansprüche, **dadurch gekennzeichnet, dass** die Bodenbearbeitungsvorrichtung (2) eine Egge (46) umfasst.

## Revendications

1. Dispositif cultivateur (2) conçu pour la culture du sol et tiré par un véhicule, le dispositif comprenant un bâti (6) équipé d'une barre de traction (4) fixée au bâti; un arbre de fixation (8) destiné aux versoirs (10', 10"), l'arbre s'étendant essentiellement dans la direction de l'axe longitudinal du bâti (6) ; et des versoirs (10', 10") ; et une barre de traction (4) qui est couplée essentiellement de façon centrale au bâti (6),
dans lequel
a) il existe deux type de versoirs (10', 10") ; des premiers versoirs (10') qui, lors du travail de culture, versent la terre vers la droite par rapport à ladite direction d'entraînement; et des seconds versoirs (10") qui, lors du travail de culture, versent la terre vers la gauche par rapport à ladite direction d'entraînement ;
b) les versoirs (10', 10") sont fixés à l'arbre de fixation des versoirs (8) de façon que les premiers versoirs (10') soient essentiellement parallèles l'un par rapport à l'autre, que les seconds versoirs (10") soient essentiellement parallèles l'un par rapport à l'autre, et que les premiers versoirs (10') soient dirigés dans une direction essentiellement différente de celle des seconds versoirs (10") ;
c) l'arbre de fixation (8) des versoirs (10', 10") est agencé de façon à tourner autour de son axe longitudinal de sorte qu'il existe au moins deux positions d'arbre de fixation (8) à utiliser pour les cultures ; une première position dans laquelle les premiers versoirs (10') sont disposés, lors du travail de culture, de façon à verser la terre vers la droite par rapport à ladite direction d'entraînement ; et une seconde position dans laquelle les seconds versoirs (10") sont disposés, lors du travail de culture, de façon à verser la terre vers la gauche par rapport à ladite direction d'entraînement, **caractérisé en ce que** la barre de traction (4) est couplée au bâti (6) de façon que l'angle formé entre l'axe horizontal du bâti (6), lorsqu'il est essentiellement horizontal et transversal en ce qui concerne la direction d'entraînement lors du travail de culture, et la barre de traction (4), étant essentiellement parallèle à la direction d'entraînement, lors du travail de culture, est agencé pour pouvoir être réglable.

2. Dispositif cultivateur (2) selon la revendication 1, **caractérisé en ce que** le dispositif cultivateur est un dispositif cultivateur léger présentant une profondeur de culture de 5 à 15 cm environ, de façon avantageuse de 5 à 10 cm environ.

3. Dispositif cultivateur (2) selon la revendication 1, **caractérisé en ce que** le dispositif cultivateur est une charrue présentant une profondeur de culture de 10 à 25 cm environ, de façon avantageuse de 10 à 20 cm.

4. Dispositif cultivateur (2) selon la revendication 1, 2 ou 3, **caractérisé en ce que** l' angle formé entre la barre de traction (4) et le bâti (6) peut être réglé dans au moins deux position différentes, de sorte que dans la première position, l'angle aigu formé entre la barre de traction (4) et l'axe longitudinal du bâti (6) se trouve sur le côté droit par rapport à ladite direction d'entraînement, et que dans la seconde position, l'angle aigu se trouve sur le côté gauche par rapport à ladite direction d'entraînement.

5. Dispositif cultivateur (2) selon l'une quelconque des revendications précédentes, **caractérisé en ce que** l'angle formé entre la barre de traction 4 et l'axe longitudinal du bâti 6 peut être réglable, de façon avantageuse d'une manière continue, entre 0° et 180° environ, de façon avantageuse entre 10° et 160° environ.

6. Dispositif cultivateur (2) selon l'une quelconque des revendications précédentes, **caractérisé en ce que** les premiers versoirs (10') et les seconds versoirs (10") sont des images symétriques l'une de l'autre.

7. Dispositif cultivateur (2) selon l'une quelconque des revendications précédentes, **caractérisé en ce que** l'arbre de fixation des versoirs (8) est fixé au moins au niveau de ses deux extrémités au bâti (6) du dispositif cultivateur.

8. Dispositif cultivateur (2) selon l'une quelconque des revendications précédentes, **caractérisé en ce que** l'arbre de fixation des versoirs (8) est monté dans des paliers au moins au niveau de ses deux extrémités.

9. Dispositif cultivateur (2) selon l'une quelconque des revendications précédentes, **caractérisé en ce que** l'arbre de fixation des versoirs (8) peut tourner de 180° environ autour de son axe longitudinal, de façon avantageuse de 90° ou de 60° environ.

10. Dispositif cultivateur (2) selon l'une quelconque des revendications précédentes, **caractérisé en ce que** chaque versoir (10', 10") est fixé à l'arbre de fixation des versoirs (8) en utilisant au moins une broche de cisaillement.

11. Dispositif cultivateur (2) selon l'une quelconque des revendications précédentes, **caractérisé en ce que** le dispositif cultivateur possède une roue ou des roues (12), de façon avantageuse, une roue (12) au niveau des deux extrémités du bâti (6), lesquelles roues supportent le dispositif cultivateur (2).

12. Dispositif cultivateur (2) selon la revendication 11, **caractérisé en ce que** la hauteur de la roue ou des roues est agencée de façon à être réglable, de sorte que la profondeur de culture du dispositif cultivateur (2) est réglée en réglant la hauteur.

13. Dispositif cultivateur (2) selon l'une quelconque des revendications précédentes, **caractérisé en ce qu'**un ajustement ou quelques ajustements du dispositif cultivateur, de façon avantageuse, l'angle formé entre la barre de traction (4) et l'axe longitudinal du bâti (6) et/ou la rotation de l'arbre de fixation des versoirs (8) autour de son axe longitudinal, est ou sont hydraulique(s).

14. Dispositif cultivateur (2) selon l'une quelconque des revendications précédentes, **caractérisé en ce que** les moyens (14) qui font tourner l'arbre de fixation (8) des versoirs (10', 10") dans les première et seconde positions, verrouillent l'arbre de fixation (8) dans la première position lorsque le sol est cultivé avec les premiers versoirs (10').

15. Dispositif cultivateur (2) selon l'une quelconque des revendications précédentes, **caractérisé en ce que** lorsque l'arbre de fixation (8) des versoirs (10', 10") se trouve dans sa seconde position, laquelle est utilisée pour cultiver le sol avec les seconds versoirs (10"), l'arbre ne peut pas tourner davantage dans la direction, dans laquelle la force agissant sur les versoirs (10") tend à faire tourner ledit arbre de fixation (8) pendant la culture du sol.

16. Dispositif cultivateur (2) selon l'une quelconque des revendications précédentes, **caractérisé en ce que** le dispositif de culture (2) comporte une herse arrière (46) .
